# EUROPEAN PATENT SPECIFICATION

(11) **EP 0 550 679 B1**
(45) Date of publication and mention of the grant of the patent: **18.01.1995**
(21) Application number: 91919183.3
(22) Date of filing: 11.09.1991
(51) Int. Cl.: B02C 7/14, D21B 1/14, D21D 1/30

(54) **BEARING SYSTEM IN A REFINER**
LAGERSYSTEM IN EINEM REFINER
SYSTEME DE SUPPORT INCORPORE DANS UN RAFFINEUR

(30) Priority: 03.10.1990 SE 9003149
(43) Date of publication of application: 14.07.1993
(73) Proprietor: SUNDS DEFIBRATOR INDUSTRIES AKTIEBOLAG, 851 94 Sundsvall (SE)
(72) Inventor: KJELLQVIST, Olof, S-852 52 Sundsvall (SE)
(74) Representative: Sundqvist, Hans
(86) International application number: PCT/SE91/00599
(87) International publication number: WO 92/05874

(56) References cited:
- US-A- 4 801 099

## Description

This invention relates to a bearing system in refiners or grinders, which comprise a pair of opposed refining members, which are axially adjustable and rotatable relative to each other, and which between themselves define a refining gap, through which the raw material is passed. During the passage, considerable axial forces are produced which act against the members arranged to maintain the desired refining gap between the refining members.

The invention, more precisely, relates to a refiner of rotating disc type for refining papermaking pulp and the like, where the raw material to be refined or treated in some other way is passed through a refining gap, which is defined between a pair of refining discs axially adjustable relative to each other. The refining discs rotate relative to each other in a plane perpendicular to the shafts thereof. At least one of the discs is axially adjustable and mounted on a rotary shaft, which in response to the pressure acting on the disc is axially movable with the adjustable refining disc. The raw material can be wood chips, bagasse, fibre suspensions or similar material, which is fed to the central portion of the refining gap, through which it is accelerated radially by action of the centrifugal force generated by the rotation of the discs. The processed material is discharged after the refining operation through a peripheral opening between the discs into a surrounding casing.

The axial movement of the rotary shaft is controlled in order to maintain the predetermined refining gap between the discs. The gap is of varying size, depending on the use of the refiner. In conventional pulp refiners, for examle, the gap normally has the size of between 0.1 and 1 mm, while in refiners for waste paper the gap size can be as large as 2.5 mm. At other applications, the refining gap may be as small as 0.05 mm. Pulp refiners of the described type are disclosed in US patents 4 082 233, 4 283 016, 4 378 092 and 4 801 099.

The rapid acceleration of the material through the narrow refining gap brings about axial pressure forces, which tend to separate the discs from each other and thereby widen the refining gap, as a result of which the efficiency of the refiner is deteriorated seriously.

When the refiners or grinders are part of a closed or pressurized system, for example for the treatment of a liquid slurry, additional force must be supplied to the drive in excess to the axial pressure forces acting upon the discs. This additional force is required not only for driving the discs in order to obtain the desired refining or grinding. but also for driving the discs against the liquid friction or hydraulic brake forces acting on the discs so that additional axial load variations on the rotary shaft are obtained.

When the effect of these forces on the axial position of the rotary shaft are not controlled effectively, the refiner will break down. Furthermore, the resistance against these pressure forces increases substantially with increasing diameter of the discs.

Owing to the increasing demand of refining systems of high capacity, which require refining discs with a great diameter, as for example of the magnitude 150 cm or greater, the absorption of these axial pressure forces has become a widely recognized problem.

Newly developed refiners have a disc diameter of 165-170 cm, a rotation speed of 1500-3600 rpm and a power of 15 000 - 50 000 kW.

For a better understanding of the enormous axial loads or pressure forces acting on the rotation shaft, one can imagine that a disc with a diameter of 150 cm rotating at 1800 rpm develops a centrifugal force corresponding to about 2800 g, which accelerates the material through the refining gap. This centrifugal force can apply on the shaft an axial load of about 100 ton, which has to be taken up by the bearing structure. At a speed of the refining disc twice as high, i.e. 3600 rpm, the centrifugal force increases by a factor of 4, according to the Newton law on force and motion. The centrifugal force, thus, increases to 11 200 g, whereby the axial load on the rotation shaft can increase to 200-400 ton. Such abnormally high axial loads must be distributed, at present designs, on a complicated bearing system,which requires a plurality of bearings and servomotors, with resulting increase in the dimensions and manufacturing costs of the refiner.

One example of a bearing structure of the aforesaid kind is shown in US patent 3 717 308, which discloses a bearing system with combined axial and radial bearings, which support the rotation shaft. Each bearing is coupled to a servomotor for taking up the axial pressure forces acting on the rotation shaft. Other examples of bearing designs used heretofore are shown in US patents 4 118 800, 3 212 721, 4 073 442 and 3 276 701.

US patent 4 402 463 proposes a different solution of the aforesaid problems.

The common feature of the state of art set forth in the patents referred to avove is, that the hydraulic pistons in the servomotors for thrust bearings are non-rotary.

US patent 4 801 099 (Reinhall), however, proposes to use one or several hydraulic rotation pistons, which are rigidly connected on the rotary shaft and replace entirely present systems with expensive and complicated axial, roller and/or block bearing systems. This bearing system with rotating pistons according to Reinhall comprises one or several cylinder pistons mounted on the rotary shaft to rotate together with the shaft in a pressure chamber, which is formed in a stationary cylindric housing, where the piston or pistons can be displaced axially, acting with a pressure medium, which is supplied at least to one end of the piston (pistons) in a controlled manner,in order to constantly counteract varying axial pressure forces acting on the movable rotary shaft, and in order to maintain a predetermined size of the refining gap.

This system, however, depends for its operation on a plurality of sealing devices located at the inlets of the rotary shaft in the stationary cylindric pressure housing as well as between the circumference of the rotating piston and the cylinder housing. These circumferential sealings are exposed to the vibrations of the rotating shaft which are caused by the bias of the refining elements and/or the non-uniform distribution of the material over the refining elements. In order to prevent breakdowns, it is, therefore, necessary to maintain relatively large radial gaps at the sealing surfaces. These gaps, thus, must exceed the maximum radial vibrations. As a result thereof, great amounts of pressure medium supplied to the piston housing are lost as leakage through the radial sealing gaps, and which at necessary relatively high hydraulic pressure of 100-400 bar require much energy and large expensive pump installations.

The present invention has the object to eliminate the greater part of this leakage, which is not required for the axial balancing and control of the shaft. According to the invention, this can be achieved by transferring all of the sealing surfaces required from the circumference of the shaft and piston to one or several radial planes on the end surfaces of the rotating piston. These end surfaces are not affected significantly by the radial vibrations of the rotating shaft, which are caused by bias of rotation etc., and, therefore, can operate with minimum sealing gaps without risk of breakdown. This results in considerably less leakage of supplied pressure medium.

The characterizing features of the invention are apparent from the claims.

The invention is described in greater detail with reference to the accompanying drawings.

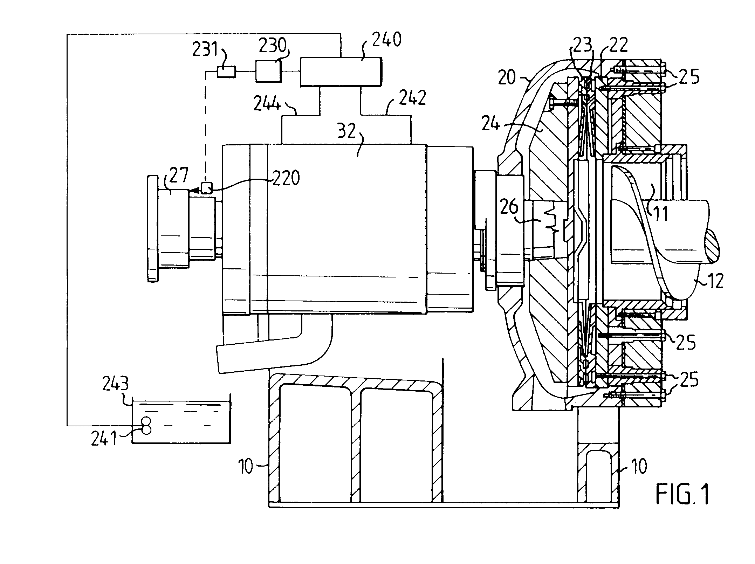

Fig. 1 is a partially cut-open lateral view of a refiner according to the invention.

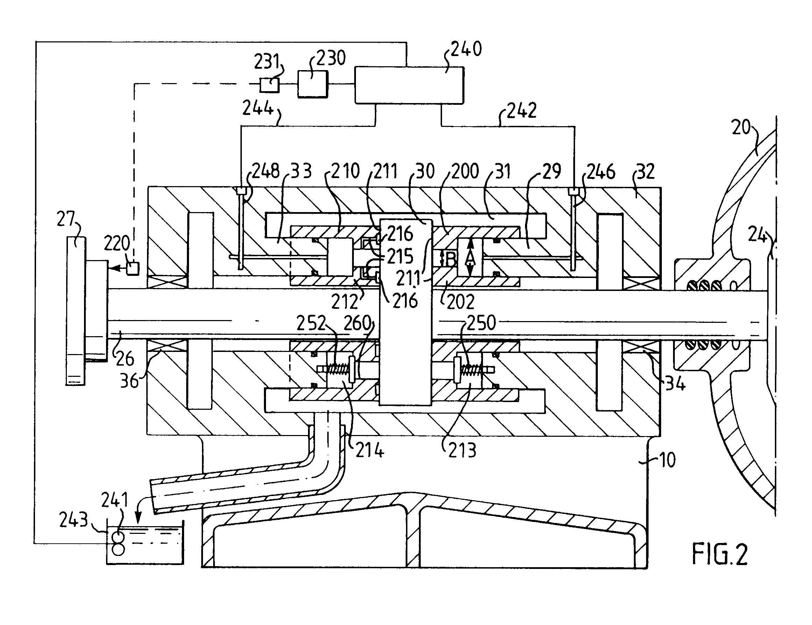

Fig. 2 is a longitudinal section of the hydraulic axial bearing systems of the refiner, according to the invention, in combination with conventional radial bearings, which movably support the rotation shaft.

The embodiment shown in the Figures comprises a stand 10, in which an axially movable shaft 26 is mounted in two bearing elements 34 and 36. These bearing elements can be slide bearings, roller bearings, axially movable radial roller bearings etc. One end 27 of the shaft 26 is arranged to be driven by a motor (not shown). The other end of the shaft 26 supports a rotary adjustable disc 24, which together with a stationary disc 22 between themselves define a refining gap. Both discs are provided with conventional refining segments 23.

The refining discs are enclosed in a refiner casing20, in which the stationary disc 22 is mounted by means of bolting 25. The raw material is fed through an opening 11 by means of a conventional feed worm 12 and introduced into the refining gap through a central opening in the stationary disc 22. Bearing elements 34,36 are supported by a bearing housing 32, which between the two bearing elements is formed with a cylindric space 31 and formed with two ring pistons 29,33 directed axially against each other. On these ring pistons, outer ring cylinders 200, 210 and inner ring cylinders 202,212 are located. The ring cylinders are movable axially, but not rotary along the ring pistons 29,33. The outer ringcylinders 200, 210 are movable along the outer surface of the respective ring piston 29, 33, and the inner ring cylinders are movable along the inner surface of the respective ring piston. Between the opposedly directed ring pistons 29, 33 a rotary cylindric piston 30 is located. This piston is mounted on the shaft 26 to rotate together with the same. The ring cylinders abut the end surfaces of the rotary piston, so that sealing gaps 211 are formed between the ring cylinders and said end surfaces. The ring cylinders, thus, are formed with a sealing surface, connecting to the radial end surfaces of the piston30.

Between the outer and inner ring cylinder 200, 202 and, respectively, 210, 212 a cavity 213 and, respectively, 214 is defined, which on one side is defined by a ring piston 29 and respectively, 33, and on the other side by the rotary piston 30. The ring cylinders are formed so that the area of the cavity is greater than the area B toward the rotary piston 30. For supplying a hydraulic pressure medium to the cavities 213, 214, channels 246 and, respectively, 248 are provided. The difference between the aforesaid A, B is adapted so that the adaptation of the ring cylinders to the rotary piston 30 by means of the hydraulic pressure medium in the cavity balances the hydraulic pressure drop in the sealing gap 211. The space 31 outside the rotary piston preferably is atmospheric.

The axial position of the rotary piston 30 is controlled and adjusted by moving axially the two non-rotary but axially movable ring cylinders 200, 210. The movement of the ring cylinders 200, 202 and, respectively, 210,212 and the force, by which the hydraulic pressure maintained in the cavities 213, 214 acts on the rotary piston 30, are determined by means of a sensing device 220, which senses the axial position of the shaft. According to the embodiment shown, the sensing device 220 is located outside the bearing housing 32, but alternatively can be placed in the cylindric space 31 and sense the position of the shaft by indicating the position of an outer ring cylinder 200, 210. A hydraulic control valve 240 is affected via a servomotor 230 and an adjustment device 231. Said control valve is supplied with the hydraulic pressure medium from an oil container 243 provided with a pump 241. The control valve 240 distributes and controls the pressure of the hydraulic medium via channels 242, 244, 246, 248 to the respective cavity 213, 214, so that the axial position set of the rotary shaft is maintained constant irrespective of varying axial shaft loads. These load variations originate from the refining member 24 and from the sub-atmospheric or over-atmospheric pressure maintained or varying in the refining housing 20.

By varying the relation between the area A of the ring piston 29,33 and the outlet area B of the cavity 213, 214 to the rotary piston 30, the contact pressure against the piston and thereby the size of the sealing gap 211 can be increased or reduced, thereby correspondingly varying the gap leakage. A normal leakage at a refiner according to the invention is below 5 l/min, compared with previous hydraulic piston bearings or block bearings, which normally require 50-200 l/min for corresponding applications. The present invention, thus, eliminates these disadvantages of expensive pump and control equipment and saves pump energy corresponding to the reduced demand of hydraulic medium.

One or several of the ring cylinders 200, 202, 210, 212 can be provided with one or several passageways 215, which extend from the cavity 213, 214 to the sealing gap 211 between the ring cylinder and the rotary piston 30. The passageway preferably opens into an overall groove 216 in the surface of the ring cylinder which abuts the rotary piston. Said groove is intended to bring about uniform distribution of the pressure medium. The passageway is formed with flow resistance or restriction, for example in the form of a sharp bend. By this arrangement a suitable pressure drop can be obtained in operation, whereby the size of the sealing gap 211 can be determined and ensured so that metallic contact between the sealing surfaces is prevented.

In order to ensure at the start, i.e. before full hydraulic pressure has been achieved, that the ring cylinders 200, 202, 210, 212 abut the end surfaces of the rotary piston 30, the ring cylinders can be made spring-loaded against the rotary piston. A number of spring means, preferably four, can, for example, be placed between each ring piston 29 and, respectively, 33 and steps 260 in the inner and outer ring cylinder 200, 202 and, respectively, 210, 212.

According to another embodiment, the outer and inner ring-cylinder 200, 202 and, respectively, 210, 212 are connected with each other by spokes or the like at that portion of the ring cylinders which is located closest to the rotating piston 30. Hereby a uniform sealing gap 211 at the outer and inner ring cylinder is ensured.

The sealing surfaces forming the sealing gap 211 preferably are plane, but also can be wedge-shaped in the direction of the radius, curved etc.

At the embodiment shown, the bearing system is formed with a ring piston and associated ring cylinders on both sides of the rotary piston 30. It is possible, however, to place ring cylinders on only one side, viz. that side of the rotary piston which is remote from the associated refining disc.

Different combinations of the bearing system according to the invention with different types of radial bearings can also be imagined. Instead of placing one radial bearing on each side of the bearing housing 32, two radial bearings can be placed outside or inside the bearing housing, seen in axial direction. Instead of conventional radial bearings, other types of bearings can be used, for example slide bearings, combined axial-radial bearings etc.

## Claims

1. A bearing system in a refiner for the making of pulp, where the raw material is refined in a refining gap between at least one pair of refining members (22, 24) rotating relative to each other, and where at least one of said refining members (24) is supported on an axially movable and rotary shaft (26), comprising a combined hydrostatic/hydrodynamic axial bearing arrangement for said shaft, and where a cylindric housing (32) comprises at least one rotary cylindric piston (30) with two opposed ends, which piston is mounted on the rotary shaft (26) for rotating together with the same, **characterized in** that at least one outer and one inner concentric ring cylinder (200, 202 and, respectively, 210, 212) are arranged to abut one of the end surfaces of the rotary piston (30), so that a sealing gap (211) is formed, that the ring cylinders are axially movable but not rotary, that the inner and outer ring cylinder are supported by a stationary ring piston (29 and, respectively, 33) located between said ring cylinders, that the area of the cavity (213 and, respectively, 214) formed between the inner and the outer ring cylinder is greater toward the ring piston (29 and, respectively, 33) than toward the end surface of the rotary piston (30), and that channels (246 and, respectively, 248) are provided for supplying a hydraulic pressure medium to said cavity.

2. A bearing system as defined in claim 1, **characterized in** that the ring cylinders (200, 202 and, respectively, 210, 212) are springloaded against the rotary piston (30) and thereby ensure contact against the same.

3. A bearing system as defined in claim 2, **characterized in** that a plurality of spring means are located between the ring piston (29 and, respectively, 33) and steps in the inner and outer ring cylinder (200, 202 and, respectively, 210, 212).

4. A bearing system as defined in any one of the preceding claims, **characterized in** that inner and outer ring cylinders (200, 202 and, respectively, 210, 212) are located on each side of the rotary piston (30).

5. A bearing system as defined in any one of the preceding claims, **characterized in** that a scanning means (220) is provided to scan the axial position of the shaft, in order to maintain via control means (230, 231,240) the necessary hydraulic pressure in the cavity (213 and, respectively, 214), so that the axial position of the shaft is kept constant.

6. A bearing system as defined in any one of the preceding claims, **characterized in** that the inner and outer ring cylinder (200, 202 and, respectively, 210, 212) are separate and movable independently of each other.

7. A bearing system as defined in any one of the claims 1-4, **characterized in** that the inner and outer ring cylinder (200, 202 and, respectively, 210, 212) are interconnected by spokes or the like to form one unit.

8. A bearing system as defined in any one of the preceding claims, **characterized in** that at least one ring cylinder (200, 202, 210, 212) is provided with at least one passageway (215) extending from the cavity (213, 214) to the sealing gap (211).

9. A bearing system as defined in claim 8, **characterized in** that the passageway (215) opens into an overall groove (216) in the surface of the ring cylinder abutting the rotary piston (30).

10. A bearing system as defined in any one of the claims 8 and 9, **characterized in** that the passageway (215) is formed with flow resistance or restriction.

## Patentansprüche

1. Lagersystem in einem Refiner zum Herstellen von Pulpe, wobei das Rohmaterial in einem Mahlspalt zwischen wenigstens einem Paar von Refinerelementen (22,24) gemahlen wird, die relativ zueinander verdrehbar sind, und wobei wenigstens eines der Refinerelemente (24) auf einer axial beweglichen und drehbaren Welle (26) angeordnet ist, umfassend eine kombinierte hydrostatische/hydrodynamische Axiallageranordnung für diese Welle, und wobei ein zylindrisches Gehäuse (32) wenigstens einen drehbaren zylindrischen Kolben (30) mit zwei gegenüberliegenden Enden aufweist, der an der drehbaren Welle (26) zur Drehung zusammen mit dieser angebracht ist,
**dadurch gekennzeichnet**,
daß wenigstens ein äußerer und ein innerer konzentrischer, ringförmiger Zylinder (200,202 bzw. 210,212) angeordnet sind, um an einer der Endflächen des drehbaren Kolbens (30) anzuliegen, so daß ein Dichtspalt (211) ausgebildet wird, daß die ringförmigen Zylinder axial beweglich, aber nicht drehbar sind,
daß die inneren und äußeren ringförmigen Zylinder auf einem stationären Ringkolben (29 bzw. 33) gelagert sind, der zwischen diesen ringförmigen Zylindern angeordnet ist, daß der Bereich des Hohlraums (213 bzw. 214), der zwischen dem inneren und dem äußeren ringförmigen Zylinder ausgebildet ist, größer ist in Richtung auf den Ringkolben (29 bzw. 33) als in Richtung auf die Endfläche des drehbaren Kolbens (30), und
daß Kanäle (246 bzw. 248) vorgesehen sind für die Zufuhr eines hydraulischen Druckmediums zu diesem Hohlraum.

2. Lagersystem nach Anspruch 1, **dadurch gekennzeichnet,** daß die ringförmigen Zylinder (200,202 bzw. 210,212) gegen den drehbaren Kolben (30) federbeaufschlagt sind und dadurch die Anlage an diesem gewährleistet wird.

3. Lagersystem nach Anspruch 2, **dadurch gekennzeichnet,** daß eine Anzahl von Federeinrichtungen zwischen dem Ringkolben (29 bzw. 33) und Absätzen im inneren und äußeren ringförmigen Zylinder (200,202 bzw. 210, 212) angeordnet ist.

4. Lagersystem nach einem der vorhergehenden Ansprüche, **dadurch gekennzeichnet,** daß die inneren und äußeren ringförmigen Zylinder (200,202 bzw. 210,212) auf jeder Seite des drehbaren Kolbens (30) angeordnet sind.

5. Lagersystem nach einem der vorhergehenden Ansprüche, **dadurch gekennzeichnet,** daß eine Abtasteinrichtung (220) vorgesehen ist, um die axiale Position der Welle festzustellen, damit über eine Steuereinrichtung (230,231,240) der notwendige hydraulische Druck in dem Hohlraum (213 bzw. 214) aufrecht erhalten wird, so daß die axiale Stellung der Welle konstant gehalten wird.

6. Lagersystem nach einem der vorhergehenden Ansprüche, **dadurch gekennzeichnet,** daß der innere und äußere ringförmige Zylinder (200,202 bzw. 210,212) getrennt und unabhängig voneinander beweglich sind.

7. Lagersystem nach einem der Ansprüche 1 bis 4, **dadurch gekennzeichnet,** daß der innere und äußere ringförmige Zylinder (200,202 bzw. 210,212) durch Speichen oder dergleichen zur Ausbildung einer Einheit miteinander verbunden sind.

8. Lagersystem nach einem der vorhergehenden Ansprüche, **dadurch gekennzeichnet,** daß wenigstens ein ringförmiger Zylinder (200,202,210,212) mit wenigstens einem Durchlaß (215) versehen ist, der sich von dem Hohlraum (213,214) zu dem Dichtspalt (211) erstreckt.

9. Lagersystem nach Anspruch 8, **dadurch gekennzeichnet,** daß der Durchlaß (215) in eine durchgehende Nut (216) in der Oberfläche des ringförmigen Zylinders mündet, der an dem drehbaren Kolben (30) anliegt.

10. Lagersystem nach einem der Ansprüche 8 und 9, **dadurch gekennzeichnet,** daß der Durchlaß (215) mit einem Strömungswiderstand oder einer Verengung ausgebildet ist.

## Revendications

1. Système de support pour raffineuse en vue de la fabrication de pâte à papier brute dans laquelle la matière première brute est raffinée dans un intervalle de raffinage entre au moins une paire d'éléments de raffinage (22, 24) tournant l'un par rapport à l'autre et où au moins l'un desdits éléments de raffinage (24) est supporté par un arbre rotatif, mobile axialement (26), comprenant un système de palier axial combiné hydrostatique/hydrodynamique pour ledit arbre et où un logement cylindrique (32) comprend au moins un piston cylindrique rotatif (30) avec deux extrémités opposées, ledit piston étant monté sur l'arbre rotatif (26) pour tourner avec ce dernier, caractérisé en ce que au moins un cylindre annulaire extérieur (200, 202 et respectivement 210, 212) sont disposés de manière à venir en butée sur l'une des surfaces d'extrémité du piston rotatif (30), afin de former un intervalle d'étanchéité (211), en ce que les cylindres annulaires sont axialement mobiles mais non rotatifs, en ce que les cylindres annulaires interne et externe sont supportés par un piston annulaire fixe (29 et respectivement 33) situé entre lesdits cylindres annulaires, en ce que l'aire de la cavité (213 et respectivement 214) formée entre les cylindres annulaires externe et interne est plus grande vers le piston annulaire (29 et respectivement 33), que vers la surface d'extrémité du piston rotatif (30) et en ce que des canaux (246 et respectivement 248) sont prévus pour délivrer un milieu de pression hydraulique à ladite cavité.

2. Système de support selon la revendication 1, caractérisé en ce que les cylindres annulaires (200, 202 et respectivement 210, 212) sont sollicités par ressort à l'encontre du piston rotatif (30) et par conséquent assurent un contact contre ce dernier.

3. Système de support selon la revendication 2, caractérisé en ce que une pluralité de moyens à ressorts sont positionnés entre le piston annulaire (29 et respectivement 33) et des redans dans les cylindres annulaires intérieur et extérieur (200, 202 et respectivement 210, 212).

4. Système de support selon l'une quelconque des revendications précédentes, caractérisé en ce que les cylindres annulaires interne et externe (200, 202 et respectivement 210, 212) sont positionnés sur chaque côté du piston rotatif (30).

5. Système de support selon l'une quelconque des revendications précédentes, caractérisé en ce que des moyens de balayage (220) sont prévus afin de balayer la position axiale de l'arbre, en vue de maintenir, par l'intermédiaire de moyens de contrôle (230, 231, 240), la pression hydraulique nécessaire dans la cavité (213 et respectivement 214), de manière que la position axiale de l'arbre soit maintenue constante.

6. Système de support selon l'une quelconque des revendications précédentes, caractérisé en ce que les cylindres annulaires interne et externe (200, 202 et respectivement 210, 212) sont séparés et mobiles indépendemment l'un de l'autre.

7. Système de support selon l'une quelconque des revendications 1-4, caractérisé en ce que les cylindres annulaires interne et externe (200, 202 et, respectivement 210, 212) sont interconnectés par des rayons ou similaires afin de constituer une unité.

8. Système de support selon l'une quelconque des revendications précédentes, caractérisé en ce que au moins un cylindre annulaire (200, 202, 210, 212) est muni d'au moins un passage (215) s'étendant à partir de la cavité (213, 214) vers l'intervalle d'étanchéité (211).

9. Système de support selon la revendication 8, caractérisé en ce que le passage (215) débouche dans une rainure complète (216) dans la surface du cylindre annulaire en butée sur le piston rotatif (30).

10. Système de support selon l'une quelconque des revendications 8 ou 9, caractérisé en ce que le passage (215) est pourvu d'une résistance au flux ou d'un étranglement.
